# EUROPÄISCHE PATENTSCHRIFT

(11) **EP 1 035 364 B1**
(45) Veröffentlichungstag und Bekanntmachung des Hinweises auf die Patenterteilung: **21.05.2003**
(21) Anmeldenummer: 99104228.4
(22) Anmeldetag: 03.03.1999
(51) Int. Cl.: F16L 9/19

(54) **Fernwärmeleitung**
Long distance heating system
Système de chauffage à grande distance

(43) Veröffentlichungstag der Anmeldung: 13.09.2000
(73) Patentinhaber: Uponor Innovation AB, 513 81 Fristad (SE)
(72) Erfinder: Riesselmann, Franz-Josef, 49393 Lohne (DE)
(74) Vertreter: Hilleringmann, Jochen, Dipl.-Ing.

(56) Entgegenhaltungen:
- EP-A- 0 779 467
- GB-A- 2 304 392

## Beschreibung

Die Erfindung betrifft eine Fernwärmeleitung mit einem Aussenrohr aus Kunststoff, einem von dem Aussenrohr umgebenen wärmeisolierenden Material und mindestens einem Innenrohr aus einem Polymermaterial zum Führen eines Fluids, wobei das Innenrohr in dem Wäremisolationsmaterial eingebettet und von dem Wärmeisolationsmaterial umgeben ist (siehe EP 0 779 467).

Im Sanitär- und Heizungsbereich werden im zunehmenden Maße Kunststoffrohre eingesetzt. Insbesondere bei der Anwendung als Heizungsrohr ist es wichtig, daß diese Kunststoffrohre sauerstoffdicht sind. Andernfalls kann nämlich der von außen durch die Rohrwandung diffundierende Sauerstoff im Heizungswasser gelöst und im Heizungskessel und anderen Metallteilen Korrosionen auslösen. Aber auch in der Anwendung als Trinkwasserrohr kann eine Diffusionssperre unerläßlich sein. Dies gilt beispielsweise, wenn Kunststoffrohre für den Trinkwassertransport in kontaminierten Gebieten eingesetzt werden. Damit Substanzen aus dem Boden bzw. der Umgebung nicht durch die Rohrwandung diffundieren und das Trinkwasser beeinflussen können, müssen sie permeationsdicht sein.

Das Problem der Wasserdampf- und Sauerstoffdurchlässigkeit von Kunststoffrohren gilt insbesondere auch bei Fernwärmeleitungen, bei denen mindestens ein Fluidführendes Rohr, zumeist jedoch zwei Fluid-führende Rohre für den Vor- und den Rücklauf, in einem Wärmeisolationsmaterial eingebettet ist, das wiederum von einem zumeist als Wellrohr ausgebildeten Kunststoff-Aussenrohr umgeben ist. Wenn bei derartigen Fernwärmeleitungen aus dem fluidführenden Rohr Wasserdampf austritt, so beeinträchtigt dieser Wasserdampf die Wärmeisolation, da infolge der Feuchtigkeit die Wärmeleitung in dem das mindestens eine Innenrohr umgebenden Wärmeisolationsmaterial erhöht wird.

Im Stand der Technik werden zur Realisierung von Diffusionssperrschichten in Kunststoffrohren Metallfolien oder spezielle Polymer-Beschichtungen eingesetzt. Das Problem bei Metallfolien besteht darin, daß diese Folien aufgrund der unterschiedlichen Wärmeausdehnungen des Kunststoffmaterials und des Metalls reißen können, wenn die Metallfolie eine Dicke von weniger als etwa 150 µm aufweist, was grundsätzlich aus Materialeinsparungsgründen wünschenswert ist. Die als Barriereschicht bzw. Diffusionssperrschicht heutzutage eingesetzten Polymere (z.B. EVOH) sind häufig sehr spröde, was dazu führen kann, daß sie aufgrund von Wärmeausdehnungen reißen. Hinzu kommt, daß diese polymeren Diffusionssperrschichten recht teuer sind und teilweise eine beträchtliche Dicke aufweisen müssen, um die gewünschte Sauerstoff- bzw. Permeationsdichtigkeit zu erzielen. Bisher werden diese Barriere- bzw. Diffusionssperrschichten durch Extrusion auf ein Kunststoff-Basisrohr hergestellt.

Der Erfindung liegt die Aufgabe zugrunde, eine Fernwärmeleitung zu schaffen, die mit einem Innenrohr versehen ist, an dem in einfacher Weise eine dauerhaft funktionsfähige Diffusionssperrschicht aufgetragen ist.

Zur Lösung dieser Aufgabe wird mit der Erfindung eine Fernwärmeleitung der eingangs genannten Art vorgeschlagen, bei der zusätzlich vorgesehen ist, daß auf der Aussen- und/oder Innenseite des Innenrohres eine Diffusionssperrschicht angeordnet ist, die ein Material auf SiO- oder Metaloxid-Basis aufweist, welches durch Plasmabeschichtung oder in gelöster Form durch Auftragen mittels Aufsprühen, Aufstreichen und/oder Tauchen auf die Aussen- und/oder Innenseite des Innenrohres aufgebracht ist.

Erfindungsgemäß ist das mindestens eine Innenrohr der Fernwärmeleitung in einem Plasma behandelt. Das Plasma beinhaltet Stoffe auf SiO- oder Metalloxid-Basis, die sich sozusagen als Plasmaprodukte auf die Oberfläche (Außenseite und/oder Innenseite) des Basiskörpers des Artikels (nachfolgend mit Rohroberfläche bezeichnet) legen und mit dem Kunststoff dieser Schichten eine feste Verbindung eingehen. Je nach Anwendung können unterschiedliche Arten von Plasma eingesetzt werden.

Der Vorteil eines Kunststoffrohres bzw. -rohrstücks mit einer in einem Plasma aufgebrachten Diffusionssperrschicht (Sperrschicht für Wasserdampf und Sauerstoff) besteht in einer preiswerten Herstellung und der guten Haftung der Diffusionssperrschicht auf der betreffenden Kunststoffschicht des Rohres. Diese Diffusionssperrschicht läßt sich überdies auf einfache Weise abschälen, wenn das Kunststoffrohr beispielsweise mit einer Schweißmuffe verbunden werden soll. Ferner weisen in einem Plasma auf SiO-Basis oder auf Basis von Metall-Alkoxiden hergestellte Diffusionssperrschichten auf Kunststoffrohren extrem gute Barriereeigenschaften gegen das Eindringen von Sauerstoff, Wasserdampf oder allgemein Gas auf.

Gemäß einer zweiten erfindungsgemäßen Variante sind die als Diffusionssperrschicht eingesetzten Stoffe auf SiO-Basis in gelöster Form auf das Innenrohr durch Tauchen, Aufsprühen und/oder Aufstreichen aufgebracht.

Nachfolgend wird anhand der Figuren ein Ausführungsbeispiel der Erfindung näher erläutert. Im einzelnen zeigen:
- Fig. 1: perspektivisch eine Schnittansicht eines Kunststoffrohres mit außenliegender Diffusionssperrschicht,
- Fig. 2: schematisch den das Aufbringen der Diffusionssperrschicht betreffenden Teil einer Kunststoffrohr-Herstellungsanlage und
- Fig. 3: den Aufbau einer Fernwärmeleitung im Querschnitt.

In Fig. list ein erfindungsgemäß beschichtetes Kunststoffrohr 10 dargestellt. Das Kunststoffrohr 10 weist ein Basisrohr 12 aus einem Thermoplasten auf. Dieses Basisrohr 12 besteht beispielsweise aus einem Polymermaterial wie insbesondere PVC, PP, PE o.dgl. Alternativ kann das Basisrohr 12 auch als Gummischlauch oder als GFK-Rohr ausgeführt sein. Von außen auf das Basisrohr 12 ist eine Diffusionssperrschicht 14 auf SiO-Basis aufgebracht. Diese Diffusionssperrschicht 14 wird einer Plasmakammer 16 beispielsweise im Durchlaufbetrieb aufgebracht, wobei sich in der Plasmakammer 16 ein Vakuum befindet. Das zu beschichtende Basisrohr 12 durchfährt von der Produktionslinie oder einer Aufwickelstation kommend kontinuierlich die Plasmakammer 12, in der es mit der SiO-Diffusionssperrschicht 14 von außen beschichtet wird. Nach Verlassen der Plasmakammer 16 wird das so beschichtete Rohr aufgewickelt.

Es ist zu beachten, daß die SiO-Diffusionssperrschicht 14 lediglich eine Dicke im nm- bis µm-Bereich aufweist. D.h., daß das Rohr 10 durchaus gebogen werden kann, ohne daß eine Beschädigung der SiO-Diffüsionssperrschicht 14 zu befürchten ist.

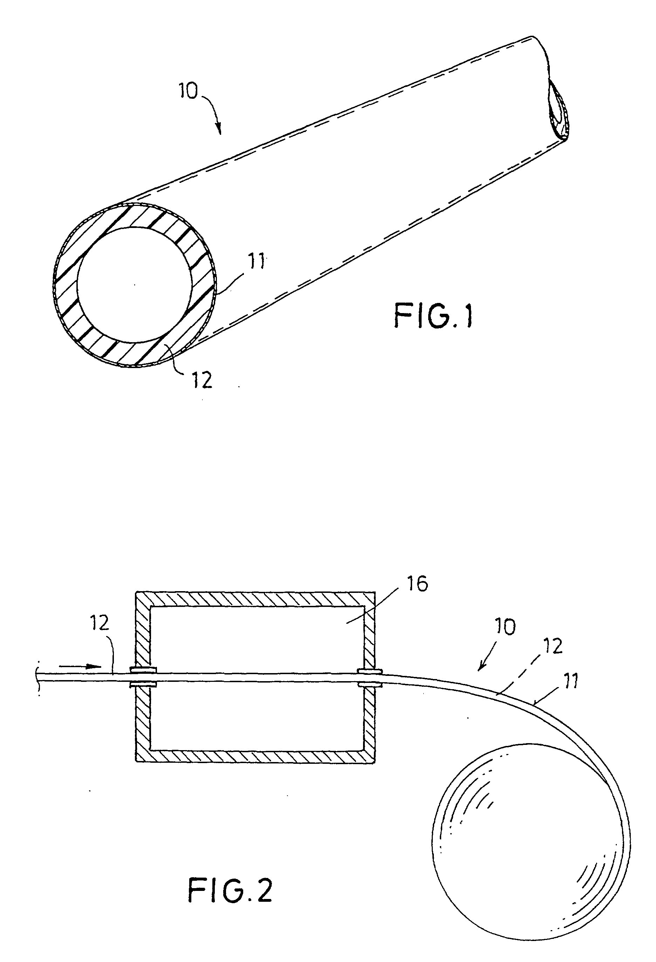

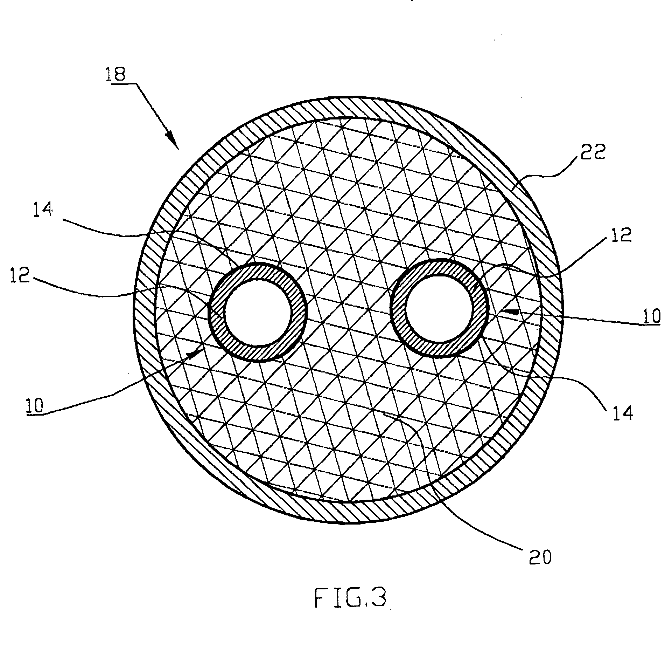

Fig. 3 zeigt im Querschnitt den Aufbau einer Fernwärmeleitung 18, bei der als Innenrohre zwei Kunststoffrohre 10 gemäß Fig. 1 eingesetzt werden. Jedes Innenrohr 10 weist also ein Basisrohr 12 aus einem Thermoplasten auf. Dieses Basisrohr 12 ist aussen mit einer Wasserdampf- und Sauerstoff-Diffüsionssperrschicht 14 versehen. Beide Innenrohre 10 (das eine Innenrohr dient dem Vorlauf, das andere dem Rücklauf) sind in Wärmeisolationsmaterial 20 eingebettet. Dieses Wärmeisolationsmaterial 20 kann als Wickelkörper um die Innenrohre 10 herumgewickelt sein oder in Form eine Rohres vorliegen, das axiale Durchlässe zur Aufnahme der Kunststoffrohre 10 aufweist. Aussen um den Kern aus Wärmeisolationsmaterial 20 herum befindet sich ein Kunststoff-Aussenrohr 22, das vorzugsweise als Wellrohr ausgebildet ist.

Die Diffusionssperrschicht 14 zum Unterdrücken des Austritts von Wasserdampf aus dem Innern der Kunststoff-Innenrohre 10 hat den Vorteil, daß verhindert wird, daß das Wärmeisolationsmaterial 20, bei dem es sich insbesondere um ein Schaumstoffinaterial handelt, durch sich niederschlagenden Wasserdampf durchnässt wird. Dies nämlich hat zur Folge, daß die Wärmeisolationseigenschaften des Materials 20 sich verschlechtern, was schließlich zur Unbrauchbarkeit der Femwärmeleitung 18 führen kann.

Alternativ zu der SiO-Diffusionssperrschicht 14 kann als Barriere für Gasdifussion und Wasserdampfdurchtritt auch ein Material auf Basis von Metall-Alkoxiden insbesondere in Form modifizierter Metalloxidsole eingesetzt werden.

## Patentansprüche

1. Fernwärmeleitung mit
- einem Aussenrohr (22) aus Kunststoff,
- Wärmeisolationsmaterial (20), das von dem Außenrohr (22) umgeben ist, und
- mindestens einem Innenrohr (10) aus einem Polymermaterial zum Führen eines Fluids, wobei das Innenrohr (10) in dem Wärmeisolationsmaterial (20) eingebettet ist,
- wobei auf der Aussen- und/oder Innenseite des Innenrohres (12) eine Diffusionssperrschicht (14) angeordnet ist,
**dadurch gekennzeichnet,**
- **daß** die Diffusionssperrschicht (14) ein Material auf SiO- oder Metalloxid-Basis aufweist, das durch Plasmabeschichtung oder in gelöster Form durch Auftragen mittels Aufsprühen, Aufstreichen und/oder Tauchen auf die Aussen- und/oder Innenseite des Innenrohres (12) aufgebracht ist.

## Claims

1. Long-distance heating conduit, comprising
- an outer tube (22) from plastic material,
- heat insulating material (20) surrounded by the outer tube (22), and
- at least one inner tube (10) of a polymeric material for conducting a fluid, the inner tube (10) being embedded in the heat insulating material (20),
- the outer and/or inner sides of the inner tube (10) having a diffusion barrier layer (14) arranged thereon,
**characterized in**
**that** the diffusion barrier layer (14) comprises a material based on SiO or metal oxide applied onto the outer and/or inner sides of the inner tube (10) by plasma coating or in dissolved form by spraying, brushing and/or immersion.

## Revendications

1. Conduite de chauffage à grande distance, comportant :
- un tube extérieur (22) en matière synthétique,
- un matériau d'isolation thermique (20) entouré par le tube extérieur (22), et
- au moins un tube intérieur (10) réalisé en un matériau polymère, pour assurer le guidage d'un fluide, le tube intérieur (10) étant incorporé dans le matériau d'isolation thermique (20),
- sur la face extérieure et/ou intérieure du tube intérieur (12) étant disposée une couche de barrière de diffusion (14),
**caractérisée en ce que**,
- la couche de barrière de diffusion (14) présente un matériau à base de SiO ou d'oxyde métallique, appliqué sur la face extérieure et/ou intérieure du tube intérieur (12), par un procédé de revêtement au plasma, ou sous forme dissoute, par application par pulvérisation, enduction et/ou immersion.
